# EUROPÄISCHE PATENTSCHRIFT

(11) **EP 0 623 377 B1**
(45) Veröffentlichungstag und Bekanntmachung des Hinweises auf die Patenterteilung: **20.01.1999**
(21) Anmeldenummer: 94102301.2
(22) Anmeldetag: 16.02.1994
(51) Int. Cl.: B01D 46/52, B60H 3/06

(54) **Filterelement**
Filter element
Elément filtrant

(30) Priorität: 04.05.1993 DE 4314563; 10.07.1993 DE 4323136
(43) Veröffentlichungstag der Anmeldung: 09.11.1994
(73) Patentinhaber: FILTERWERK MANN & HUMMEL GmbH, 71638 Ludwigsburg (DE)
(72) Erfinder: Sommer, Bruno, D-1636 Ludwigsburg (DE); Luka, Helmut, D-70806 Kornwestheim (DE); Schürg, Thomas, D-71634 Ludwigsburg (DE); Rapp, Siegfried, D-1711 Murr (DE); Moser, Nikolaus, Dr., D-71254 Ditzingen (DE)
(74) Vertreter: Voth, Gerhard, Dipl.-Ing.

(56) Entgegenhaltungen:
- EP-A- 0 082 106
- EP-A- 0 490 169
- DE-A- 1 407 291
- DE-C- 4 002 078
- GB-A- 1 570 385

## Beschreibung

Die Erfindung betrifft ein Filtereinsatz zum Filtern der Frischluft für den Innenraum eines Fahrzeugs. Solche Filtereinsätze bestehen üblicherweise aus einem in Zickzack-Falten gelegten Filterwerkstoff, beispielsweise aus Papier oder Vliesstoff.

Bei der Dimensionierung dieser Filtereinsätze, die beispielsweise bei Fahrzeugklimaanlagen, aber auch bei einfachen Lüftungsanlagen für Fahrzeuge verwendet werden, ist zu berücksichtigen, daß die Anzahl der Falten und die Faltentiefe abhängig ist von dem erforderlichen Luftdurchsatz und von den filtertechnischen Eigenschaften. Der durch den Staubfilter erzeugte Druckabfall soll dabei möglichst minimal sein.

Bei der Herstellung wird zunächst der Filtereinsatz geformt, wobei die durch zickzackförmige Falten gebildete Taschen an den Außenkanten üblicherweise mit einem festen Zusatzwerkstoff verklebt werden. Anschließend werden die einzelnen, so gebildeten Falten, im Abstand zueinander festgelegt und der Filtereinsatz in einen Rahmen eingesetzt. Mit Hilfe von PUR-Weichschaum werden nunmehr die unteren Randkanten des Filtereinsatzes miteinander verbunden, so daß der Abstand der einzelnen Falten arretiert ist. Dieser PUR-Schaum dient gleichzeitig als Rahmen und als Dichtung, um später einen leckfreien Anschluß des in ein entsprechendes Gehäuse eingesetzten Filters zu erreichen.

Die gefertigten Filtereinsätze besitzen zum Teil keine genügende Eigenstabilität und benötigen für den Einbau einen entsprechend aufwendigen Aufnahmerahmen. Ein weiterer Nachteil besteht im Recycling der Filtereinsätze. Neben dem Filtermedium müssen Zusatzwerkstoffe, wie z.B. der PUR-Rahmen entsorgt werden.

Für die bekannten Herstellungsverfahren sind mehrere Arbeitsgänge erforderlich, z.B. Stirnkantenverklebung, Schäumen oder auch Spritzgießen des Rahmens. Nachteilig ist auch, daß die flüssige Dichtmasse an den Außenkanten der Falten in der Form expandiert und reagiert, d.h. sie fließt auch in den Bereich unter den eigentlichen Faltenpack und verschließt dadurch teilweise die An- oder Abströmöffnung, so daß der Faltenpack bezüglich der wirksamen Filteroberfläche nicht optimiert ist.

Aus der DE-OS 40 02 078 ist ein Filtereinsatz zu entnehmen, der aus einem Vliesstoff besteht, welcher thermisch verschweißbar ist und bei dem die Faltenaußenkante umgeknickt und mittels Ultraschall verschweißt ist. Das Ultraschallverschweißen von solchen Filtereinsätzen hat jedoch den Nachteil, daß aufwendige Werkzeuge erforderlich sind und dieses Ultraschallverschweißen nur bei einem aus thermoplastischen Werkstoff bestehenden Vlies zuverlässig funktioniert. Bei zellulosehaltigen Filtermaterialien ist dieses Verfahren nicht optimal anwendbar.

Die GB 1570385 beschreibt ein Filterelemet bei dem ein Rahmen vorgesehen ist, dieser Rahmen weißt an den Schmalseiten Dichtwinkel auf, die eine Stabilisierung des gesamten Filterelements an diesen Schmalseiten vornehmen. Ein Nachteil bei dieser Anordnung ist darin zu sehen, daß die Anordnung von Dichtwinkel einen zusätzlichen Montageaufwand erfordern und damit daß Filterelement nicht mehr wirtschaftlich herstellbar ist.

Aus der EP 0 490 169 ist ein Filtereinsatz bekannt, der zusätzlich zur Verstärkung des Randes Dichtringe aufweist, diese Dichtringe führen ebenfalls zu einem erhöhten Montageaufwand und damit zu einem aufwendigen Herstellverfahren. Sofern keine Dichtringe angewendet werden, ist ein stabiler Rahmen für dieses Filterelement erforderlich.

Der Erfindung liegt die Aufgabe zugrunde, einen biegesteifen Filtereinsatz zu schaffen, welcher aus einem leicht zu entsorgenden Material wirtschaftlich hergestellt werden kann.

Diese Aufgabe wird durch die Merkmale des Hauptanspruchs gelöst.

Der erfindungsgemäße Filtereinsatz ist aufgrund seines Aufbaus in drei Koordinatenrichtungen biegesteif. Durch die selbsttragende Ausführung wird das Handling und die Montage erleichtert sowie die konstruktive Gestaltung der Aufnahmevorrichtung und die Applikation der Dichtung vereinfacht. Außerdem läßt sich ein solcher Filtereinsatz nach Gebrauch ohne weiteres thermisch entsorgen, da er im wesentlichen aus Zellulosefasern besteht. Durch das thermische Verkleben der Stirnseitenabdeckung sowie der Winkelstreifen ist eine hohe Produktionsrate und damit eine wirtschaftliche Herstellung des Filters möglich.

Alternativ sieht die Erfindung vor, die Seitenstreifen mit einem Dichtwinkel zu versehen. Dieser Dichtwinkel erstreckt sich längs der Stirnkanten nach innen und kann an einer gehäusefesten Dichtung angelegt werden. Dadurch kann eine zusätzliche Schaumstoffdichtung entfallen.

Sämtliche Komponenten des Filtereinsatzes bestehen aus dem Material des Filterelements. Dadurch ist bei der Entsorgung eine Trennung nicht erforderlich und beispielsweise die thermische Entsorgung problemlos möglich.

Das Material wird mittels eines thermisch aktivierbaren Klebstoffs mit dem Filterelement verbunden, wobei es zweckmäßig ist, die Materialstärke der Seitenstreifen bzw. der Winkelstreifen so zu bemessen, daß eine möglichst gute Wärmeüberteragung auf den Klebstoff bzw. auf die Kontaktfläche mit dem Filterelement gewährleistet ist.

Gemäß einer Weiterbildung der Erfindung ist vorgesehen, zur Stabilitätserhöhung des Filtereinsatzes auf die Oberfläche desselben Versteifungsstreifen anzubringen. Diese erhöhen die Stabilität des Filters quer zu dem Faltenverlauf und erhöhen damit auch gleichzeitig die Betriebssicherheit des Filters. Leckagen im Dichtungsbereich werden somit vermieden.

Das Verfahren zur Herstellung des erfindungsgemäßen Einsatzes zeichnet sich durch Einfachheit und hohe Wirtschaftlichkeit aus. Die Herstellung kann mit geringem Aufwand automatisiert werden. Damit wird eine kontinuierliche und hohe Qualität des hergestellten Filtereinsatzes erzielt.

Diese und weitere Merkmale von bevorzugten Weiterbildungen der Erfindung gehen außer aus den Ansprüchen auch aus der Beschreibung und den Zeichnungen hervor.

Die Erfindung wird im folgenden anhand eines Ausführungsbeispiels näher erläutert. Es zeigt:
- Figur 1: einen Filtereinsatz
- Figur 2: einen Ausschnitt aus dem Herstellverfahren zur Herstellung des Filtereinsatzes gemäß Figur 1.

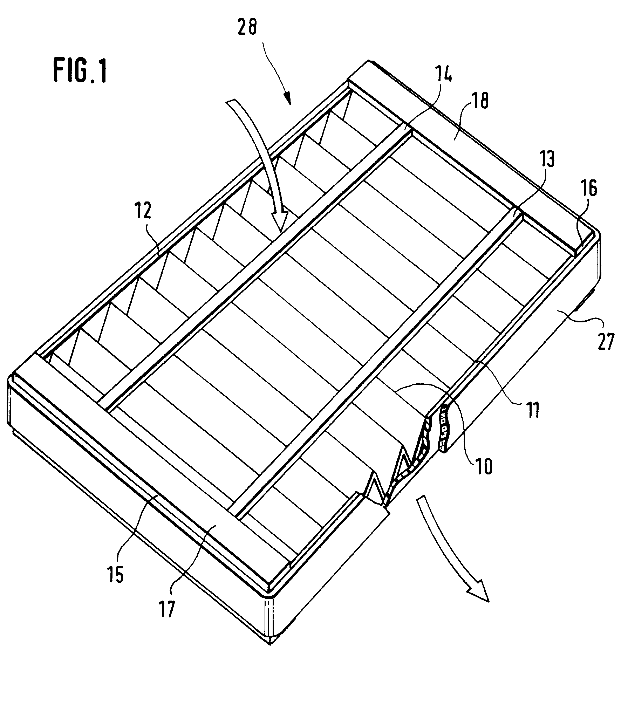

Der Filtereinsatz gemäß Figur 1 weist ein zickzackförmig gefaltetes Filtermaterial auf, beispielsweise ein Papierfilterelement 10. An diesem Filterelement sind an den Längsseiten Seitenstreifen 11, 12 vorgesehen. Diese Seitenstreifen sind mittels eines Klebstoffs mit den Stirnseiten des Filterelements verbunden, wobei eine schmutzundurchlässige Verbindung gewährleistet ist. Auf der Oberseite des Filterelements 10 sind zwei Versteifungsstreifen 13, 14 angeordnet. Diese sind ebenfalls mit einem thermisch aktivierbaren Klebstoff mit dem Filterelement verbunden und dienen der Längsstabilisierung des Filterelements.

Üblicherweise verwendete man bisher zur Längsstabilisierung sogenannte Leimraupen, die vor dem Falten des Filterelements aufgetragen wurden und die Falten an der Auftragsstelle miteinander verbunden haben. Der Nachteil dieser Leimraupen ist jedoch die große Menge an Schmelzkleber verglichen mit dem minimalen Kleberauftrag (0,3 mm) bei den Versteifungsstreifen. Durch die Versteifungsstreifen 13, 14 wird die Filterfläche nur unwesentlich reduziert.

An der vorderen und hinteren Stirnfläche des Filterelements sind Winkelstreifen 15, 16 angeordnet. Diese übergreifen mit ihren oberen Schenkeln 17, 18 wenigstens drei Falten des Filterelements, so daß das Biegemoment der Winkelstreifen erhöht wird. In Verbindung mit den Versteifungsstreifen 13 und 14 wird ein Filtereinsatz mit einer hohen Formstabilität geschaffen.

Die Seitenstreifen 11, 12 und die Winkelstreifen 15, 16 werden von einer Schaummstoffdichtung 27 umfaßt. Diese Schaumstoffdichtung ist beispielsweise mit einer selbstklebenden Schicht versehen und ist damit unlösbar mit den Stirnseitenelementen verbunden. Der Filtereinsatz 28 weist keine Haltelaschen auf. Das Einsetzen des Filtereinsatzes geschieht manuell durch Eindrücken in den vorgesehenen Rahmen. Beim Entfernen kann der Filtereinsatz zerstört werden, da er nicht ausgeblasen bzw. ausgeklopft und erneut eingesetzt werden soll, sondern grundsätzlich ein neuer Filtereinsatz verwendet werden muß.

Selbstverständlich besteht auch die Möglichkeit, den Filtereinsatz 28 mit sogenannten Entnahmelaschen zu versehen. Diese sind auf den Filterspitzen im Bereich der Schmalseiten des Filtereinsatzes angeordnet und ermöglichen das Herausnehmen des Filtereinsatzes. Auch bei einem solchen Filtereinsatz muß allerdings gewährleistet sein, daß dieser nicht nochmals benutzt wird, sondern ein neuer Filtereinsatz eingebaut wird.

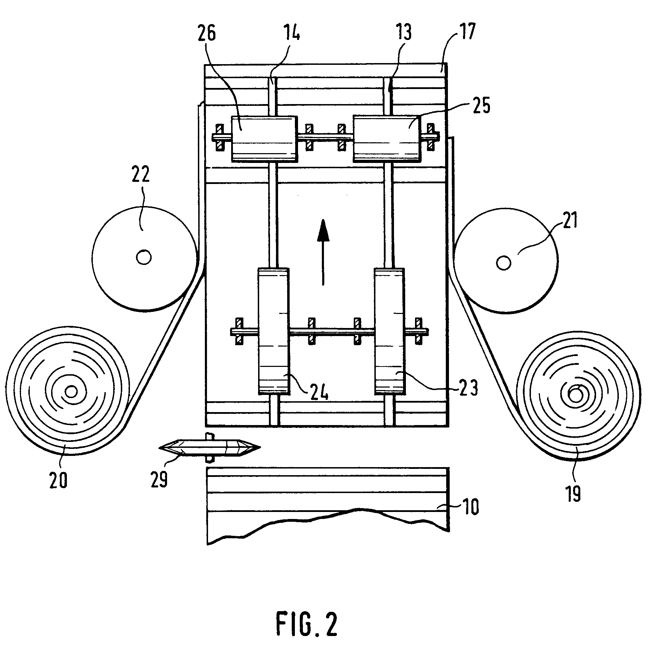

In Figur 2 ist ein Ausschnitt des Herstellverfahrens des Filtereinsatzes 28 gezeigt. Das Filterelement wird zunächst in einer hier nicht dargestellten Vorrichtung zickzackförmig gefaltet und mit einem Schneidrad 29 auf Länge geschnitten. Auf zwei seitlich angeordneten Rollen 19, 20 befindet sich das Material der Seitenstreifen. Dieses Material wird über Andruckrollen 21, 22 zugeführt, gleichzeitig mittels dieser Andruckrollen erwärmt und thermisch mit dem Filterelement 10 verbunden. Parallel hierzu werden die Versteifungsstreifen 13, 14 angeordnet. Auch diese werden von Rollen 23, 24 abgenommen und über heizbare Andruckrollen 25, 26 auf das Filterelement 10 aufgeklebt oder mittels Ultraschallschweißverfahren angeschweißt.

In einem anschließenden Arbeitsgang erfolgt das Ankleben der Winkelstreifen 15, 16 und das Anbringen der umlaufenden Schaumstoffdichtung 27.

### Bezugszeichenliste

- 10: Filterelement
- 11: Seitenstreifen
- 12: Seitenstreifen
- 13: Versteifungsstreifen
- 14: Versteifungsstreifen
- 15: Winkelstreifen
- 16: Winkelstreifen
- 17: Schenkel
- 18: Schenkel
- 19: Rolle
- 20: Rolle
- 21: Andruckrolle
- 22: Andruckrolle
- 23: Rolle
- 24: Rolle
- 25: Andruckrolle
- 26: Andruckrolle
- 27: Schaumstoffdichtung
- 28: Filtereinsatz
- 29: Schneidrad

## Patentansprüche

1. Filtereinsatz für die Filtrierung der einem Kraftfahrzeuginnenraum zugeführten Frischluft, mit einem zickzack-förmig gefalteten Filterelement (10), welches selbsttragend ist, wobei an den beidseitig verlaufenden Stirnflächen mit Klebstoff beschichtete Seitenstreifen (11, 12) vorgesehen sind und an den parallel zur Faltung verlaufenden Stirnflächen Winkelstreifen (15, 16) angeordnet sind, deren erster Schenkel (17, 18) sich über wenigstens drei Faltkanten erstreckt und wobei entweder eine Schaumstoffdichtung (27) vorgesehen ist, die längs der Stirnflächen verläuft, oder die Seitenstreifen (11, 12) an der Oberseite des Filterelements in Richtung des Filterelements abgewinkelt sind und eine Dichtfläche bilden, wobei die Winkelstreifen (15, 16) und die Seitenstreifen (11, 12) aus dem Material des Filterelements hergestellt sind und wobei die mit dem Filtereinsatz zu verklebenden Elemente eine geringere oder gleiche Materialstärke in Bezug auf die Materialstärke des Filterelements (10) aufweisen.

2. Filtereinsatz nach Anspruch 1, dadurch gekennzeichnet, daß auf der Oberseite des Filterelements wenigstens ein Versteifungsstreifen (13, 14) aufgeklebt ist, welcher aus dem Material des Filterelements hergestellt ist und eine geringere oder gleiche Materialstärke in Bezug auf die Materialstärke des Filterelements (10) aufweist.

3. Filtereinsatz nach einem der vorherigen Ansprüche, dadurch gekennzeichnet, daß die mit dem Filterelement zu verklebenden Elemente (11, 12, 13, 14, 15, 16) mit einem thermisch schmelzbaren oder thermisch aktivierbaren Kleber versehen sind.

4. Filtereinsatz nach einem der vorhergehenden Ansprüche , dadurch gekennzeichnet, daß an den Seitenbereichen Entnahmelaschen auf den Filterspitzen mit Ultraschall oder mittels Klebemittel befestigt sind.

5. Verfahren zur Herstellung eines Filtereinsatzes nach Anspruch 1 wobei ein Filterpapier zickzack-förmig zu einem Filterelement (10) gefaltet wird und das Filterelement (10) an seinen Stirnflächen mit einem mit Klebstoff versehenen Seitenstreifen (11, 12) in Kontakt gebracht wird, dieser Kleber erhitzt und ein Anpreßdruck auf die Seitenstreifen (11, 12) ausgeübt wird zum Verbinden der Seitenstreifen (11, 12) mit dem Filterelement (10), daß anschließend an den parallel zu den Falten des Filterelements (10) verlaufenden Stirnflächen Winkelstreifen (15, 16) welche ebenfalls mit Schmelzkleber versehen sind, unter Einwirkung von Wärme, angeordnet werden und daß die Stirnflächen entweder mit einer umlaufenden Schaumstoffdichtung (27) versehen werden oder die Seitenstreifen (11, 12) an der Oberfläche des Filterelements abgewinkelt und mit dem Filterelement (10) verbunden werden.

## Claims

1. Filter insert for filtering the fresh air supplied to an automative vehicle interior, including a filter element (10), which is folded in a zigzag manner and is self-supporting, wherein lateral strips (11, 12), which are coated with adhesive material, are provided on the end faces, which extend on both sides, and angle strips (15, 16) are disposed on the end faces extending parallel to the folding, the first portion (17, 18) of said angle strips extending over at least three fold edges, and wherein either a foam material seal (27) is provided, which extends longitudinally of the end faces, or the lateral strips (11, 12) are bent-over at the upper side of the filter element in the direction of the filter element and form a sealing face, wherein the angle strips (15, 16) and the lateral strips (11, 12) are produced from the material of the filter element, and wherein the elements to be adhered to the filter insert have a material thickness which is less than or identical to the material thickness of the filter element (10).

2. Filter insert according to claim 1, characterised in that at least one reinforcing strip (13, 14) is adhered to the upper side of the filter element, said strip being produced from the material of the filter element and having a material thickness which is less than or identical to the material thickness of the filter element (10).

3. Filter insert according to one of the preceding claims, characterised in that the component parts (11, 12, 13, 14, 15, 16), which are to adhere to the filter element, are provided with a thermally meltable or thermally activatable adhesive.

4. Filter insert according to one of the preceding claims, characterised in that, at the lateral regions, release tabs are secured on the filter tips by ultrasonics or by means of adhesive agents.

5. Method of producing a filter insert according to claim 1, wherein a filter paper is folded in a zigzag manner to form a filter element (10), and the filter element (10) is brought into contact, at its end faces, with a lateral strip (11, 12), which is provided with adhesive material on its end faces, this adhesive is heated, and a compressive pressure is exerted upon the lateral strips (11, 12) to join the lateral strips (11, 12) to the filter element (10), wherein angle strips (15, 16), which are also provided with hot-melt-type adhesive, are subsequently disposed on the end faces, which extend parallel to the folds of the filter element (10), upon application of heat, and wherein either the end faces are provided with a circumferential foam material seal (27) or the lateral strips (11, 12) are bent-over at the upper face of the filter element and connected to the filter element (10).

## Revendications

1. Garniture de filtre pour filtrer l'air frais alimentant l'habitacle d'un véhicule, comprenant un élément de filtre (10) plié en zigzag, cet élément étant autoportant,
les surfaces frontales de part et d'autre comportant des bandes latérales (11, 12) revêtues d'adhésif et les faces frontales, parallèles aux plis, comportant des bandes de cornière (15, 16) dont la première branche (17, 18) s'étend au moins par-dessus trois bords de plis, et
il est prévu un joint en mousse (27), le long des faces frontales, ou des bandes latérales (11, 12) sur le côté supérieur de l'élément de filtre, repliées en direction de l'élément de filtre et formant une surface d'étanchéité, les bandes en cornière (15, 16) et les bandes latérales (11, 12) étant réalisées dans la matière de l'élément de filtre et les éléments à coller à la garniture de filtre ayant une épaisseur de matière inférieure ou égale à celle de l'élément de filtre (10).

2. Garniture de filtre selon la revendication 1,
caractérisée en ce que
sur le côté supérieur de l'élément de filtre on a collé au moins une bande de rigidification (13, 14) dans la matière de l'élément de filtre et ayant une épaisseur de matière inférieure ou égale à l'épaisseur de matière de l'élément de filtre (10).

3. Garniture de filtre selon l'une quelconque des revendications précédentes,
caractérisée en ce que
les éléments (11, 12, 13, 14, 15, 16) à coller à l'élément de filtre sont munis d'un adhésif thermofusible ou activé par voie thermique.

4. Garniture de filtre selon l'une quelconque des revendications précédentes,
caractérisée en ce que
les zones latérales comportent des pattes d'extraction fixées sur les pointes du filtre par ultrasons ou à l'aide d'une colle.

5. Procédé de fabrication d'une garniture de filtre selon la revendication 1, consistant à plier un papier filtre en zigzag pour former un élément de filtre (10) et à munir les surfaces frontales de l'élément de filtre (10) de bandes latérales (11, 12) munies de colle, pour les mettre en contact,
à chauffer la colle et à exercer une pression sur les bandes latérales (11, 12) pour relier les bandes latérales (11, 12) à l'élément de filtre (10),
puis à munir les surfaces latérales parallèles aux plis de l'élément de filtre (10) de bandes pliées (15, 16) également munies de colle thermofusible, que l'on place en chauffant,
et on munit les faces frontales soit d'un joint de mousse périphérique (27), soit que les bandes latérales (11, 12) sont recourbées à la surface de l'élément de filtre et sont reliées à cet élément (10).
